# EUROPÄISCHE PATENTANMELDUNG

(11) **EP 2 071 949 A1**
(43) Veröffentlichungstag der Anmeldung: **24.06.2009**
(21) Anmeldenummer: 07024768.9
(22) Anmeldetag: 20.12.2007
(51) Int. Cl.: A01M 21/04

(54) **Applikationsvorrichtung zur selektiven Ausbringung von Pestiziden**

(71) Anmelder: Bayer CropScience AG, 40789 Monheim (DE)
(72) Erfinder: Öser, Jörg, 45481 Mühlheim an der Ruhr (DE); Frießleben, Reinhard, Dr., 65817 Eppstein (DE); Hebbecker, Karl-Hans, 51377 Leverkusen (DE); Printz, Harald, Pakkred Nonthaburi 11120 (TH); Supapol, Jumroon, Dr., Bangpood Pakkred (TH); Wichayarangsaridh, Withaya, Soi Lasalle 29 Bang-na Sub-district (TH); Cherncaivachirakul, Amorn, Klongkum Bungkum (TH)

(57) **Zusammenfassung**

Die Erfindung betrifft eine Applikationsvorrichtung (1) zur selektiven Applikation von Pestiziden auf Unkräuter, welche die Kulturpflanzen in der Höhe überragen mit: einem Applikationsbalken (2), der mindestens eine Komponente (3) aufweist, die mit einer Flüssigkeit beaufschlagbar ist, und mit einem zur temporären Speicherung der Spritzbrühe geeigneten Material (4), das an der mit einer Flüssigkeit beaufschlagbaren Komponente (3) zumindest abschnittsweise anliegt,
wobei von dem zur temporären Speicherung der Spritzbrühe geeigneten Material (4) eine Vielzahl einzelner Verteilerelemente (5) ausgehen, sowie ein Applikationssystem, das die Applikationsvorrichtung (1) beinhaltet und ein Verfahren zum Einsatz der Applikationsvorrichtung (1) bzw. des Applikationssystems und deren Verwendung auf Kulturflächen mit variabler Breite.

## Beschreibung

Die Erfindung betrifft eine Applikationsvorrichtung zur selektiven Applikation von Pestiziden auf Unkräuter, welche die Kulturpflanzen in der Höhe überragen, mit einem Applikationsbalken, der mindestens eine Komponente aufweist, die mit einer Flüssigkeit beaufschlagbar ist, und mit einem zur temporären Speicherung der Spritzbrühe geeigneten Material, das an der mit einer Flüssigkeit beaufschlagbaren Komponente zumindest abschnittsweise anliegt.

Des Weiteren betrifft die Erfindung ein Applikationssystem und ein Verfahren zur selektiven Bekämpfung von Unkräutern, welche die Kulturpflanzen in der Höhe überragen, wobei die Breite der Kulturflächen variabel ist.

Aus dem Stand der Technik sind verschiedene Vorrichtungen zur Ausbringung von Herbiziden insbesondere von nicht-selektiv wirkenden Blattherbiziden, wie z.B. Roundup®, mit Hilfe der sogenannten Wisch-Technik bekannt. Bei der Wisch-Technik werden die Wirkstoffe nicht über die Gesamtheit der Pflanzen versprüht, sondern unter Einsatz eines mit Spritzbrühe getränkten Gewebes durch eine die Unkrautpflanze streifende Wischbewegung direkt berührt. Als Gewebe werden im Rahmen der Wisch-Technik bislang Segeltuch und dochtartige Materialien eingesetzt.

Für die großflächige Ausbringung von Herbiziden durch eine mit der Wisch-Technik verwandten Technik sind auch Flächenstreichgeräte bekannt, die aus einem an der 3-Punkt-Aufhängung eines Traktors befestigten Querbalken sowie einem an dem Querbalken in Längsrichtung befestigten Docht (Dochtbalken) bestehen. Dabei sind Querbalken bekannt, die aus einem Rohr mit Öffnung und einem das Rohr umgebenden saugfähigen Gewebe bestehen.

Die Selektivität der Unkrautbekämpfung ist gerade bei den Flächenstreichgeräten von der Wuchshöhe der Schadpflanzen abhängig. Eine selektive Applikation von Pestiziden ist nur dann möglich, wenn die zu bekämpfenden Unkräuter die Kulturpflanzen in der Höhe deutlich überragen.

Der Nachteil der aus dem Stand der Technik bekannten Vorrichtungen, insbesondere der Flächenstreichgeräte, besteht vor allem darin, dass die Kontaktfläche zwischen dem mit Spritzbrühe getränkten Gewebe und dem zu bekämpfenden Unkraut gering ist. In der Regel werden die mittels eines mit Spritzbrühe getränkten Segeltuchs oder Dochts überstrichenen Pflanzen beim Überstreichen umgebogen und somit meist nur von einer Seite berührt. D.h. bei einmaliger Bearbeitung eines unkrautbehafteten Flurstückes, erfolgt die Berührung der Unkräuter von nur einer Seite. Außerdem kippen dünnhalmige Unkräuter, wie z.B. weedy-rice in Reiskulturen, leicht zur Seite weg, so dass es nicht zu einer intensiven, d.h. flächigen Berührung zwischen dem mit Spritzbrühe getränkten Teil der Applikationsvorrichtung und dem Unkraut kommen kann.

Die Aufgabe der vorliegenden Erfindung besteht vor diesem Hintergrund in der Bereitstellung einer Applikationsvorrichtung zur Verbesserung der selektiven Ausbringung von Pestiziden auf hochwachsende, d.h. die Kulturpflanzen in der Höhe überragende, Unkräuter, insbesondere bei der Ausbringung von Herbiziden auf dünnhalmige und/oder kleinblättrige Unkräuter, wie z.B. Weedy-Reis in Reiskulturen. Dabei soll die Vorrichtung auch auf Kulturflächen mit variierender Breite eingesetzt werden können, ohne dass es zu einer Doppelbehandlung von Flächenabschnitten kommt.

Die Aufgabe wird gelöst durch eine Applikationsvorrichtung nach Anspruch 1, wobei von dem zur temporären Speicherung der Spritzbrühe geeigneten Material eine Vielzahl weiterer Verteilerelemente ausgehen.

Es liegt im Rahmen der Erfindung, dass der zur Applikationsvorrichtung gehörende Applikationsbalken entweder einteilig oder mehrteilig aufgebaut ist.

Die Verteilerelemente erlauben die temporäre Speicherung und erneute Abgabe der Spritzbrühe, d.h. deren Übertragung auf die Unkräuter. Die Verteilerelemente sind im Wesentlichen senkrecht zur Längsrichtung des Applikationsbalkens ausgerichtet.

Die mit einer Flüssigkeit, d.h. im vorliegenden Fall mit Spritzbrühe, beaufschlagbare Komponente kann entweder aus einem in den Applikationsbalken integrierten Raum bestehen oder kann alternativ aus einer gesonderten Komponente, wie z.B. einem Rohr oder einem Schlauch, bestehen, welcher mit dem Applikationsbalken verbunden ist. (Der Begriff "beaufschlagbar" im Sinne der Erfindung bedeutet, dass die jeweilige Komponente mit einer Flüssigkeit beschickt, d. h. befüllt werden kann.) Die Art der Verbindung ist nicht festgelegt, wobei eine lösbare Verbindung zur Erleichterung von möglichen Reparaturarbeiten bevorzugt ist.

Eine bevorzugte und vorteilhafterweise technisch zugleich einfach umsetzbare mehrteilige Applikationsvorrichtung besteht aus zwei gelenkartig miteinander verbundenen Abschnitten. Die Arbeitsbreite einer derartigen Vorrichtung ist am größten, wenn die beiden Abschnitte auf einer Linie liegen, d.h. vollständig ausgeklappt sind. Mit zunehmendem Zusammenklappen der beiden Abschnitte kann die Arbeitsbreite verringert werden. Dies kann von besonderem Vorteil sein, wenn die Applikationsvorrichtung auf Flächen zum Einsatz kommt, die in ihrer Breite stark variieren. Dies ist z.B. bei terassenförmig angelegten Reisfeldern der Fall.

Bei entsprechender bogenförmiger Gestaltung der Haltegriffe kann bei dieser Ausführungsform vorteilhafterweise erreicht werden, dass die zur Handhabung der Vorrichtung eingesetzten Arbeitskräfte nicht auf bereits mit Pestizid behandelten Flächenbereichen gehen müssen, sondern sich ausnahmslos auf unbehandelten Flächenabschnitten bewegen können.

Im Falle eines mehrteilig aufgebauten Applikationsbalkens, dessen einzelne Balkenabschnitte gelenkartig verbunden sind, kommt prinzipiell auch eine Konstruktion in Frage, deren Aufbau dem Prinzip eines Scherengitters entspricht. Das Scherengitter hat den Vorteil, dass der Applikationsbalken, im Gegensatz zu einem aus zwei gelenkartig miteinander verbundenen Abschnitten, beim Zusammenschieben des Scherengitters geringere Hebelkräfte auftreten, welche eine gesonderte Stabilisierung, z.B. durch entsprechend bogenförmig gestaltete Haltegriffe, erforderlich macht.

In einer bevorzugten Ausführungsform besteht der Applikationsbalken aus mindestens einem röhrenartigen Hohlprofil. Das Hohlprofil kann aus Metall oder Kunststoff bestehen und einen kreisrunden, ovalen oder polygonalen Querschnitt aufweisen. Hohlprofile aus Kunststoff und aus Aluminium eignen sich aufgrund der Korrosionsbeständigkeit und des geringen Gewichtes beider Werkstoffe besonders für die vorliegenden Zwecke.

In einer besonders bevorzugten Ausführungsform ist vorgesehen, dass der Applikationsbalken aus nur einem Hohlprofil besteht. In diesem Fall kann das Innere des Hohlprofils den in den Applikationsbalken integrierten, mit einer Flüssigkeit beaufschlagbaren Abschnitt bilden. Der Mantel des Hohlprofils weist über die gesamte Länge des Profils verteilt Öffnungen auf, aus welchen die Spritzbrühe austreten kann, um das Material zu befeuchten, das zur temporären Speicherung der Spritzbrühe geeignet ist.

In einer weiteren Ausführungsform ist vorgesehen, dass der mehrteilig aufgebaute Applikationsbalken aus zwei konzentrisch ineinander geführten Hohlprofilen besteht, die in Richtung ihrer gemeinsamen Längsachsen bewegbar, d.h. ausziehbar sind, so dass der Applikationsbalken auf eine variable Arbeitsbreite einstellbar ist.

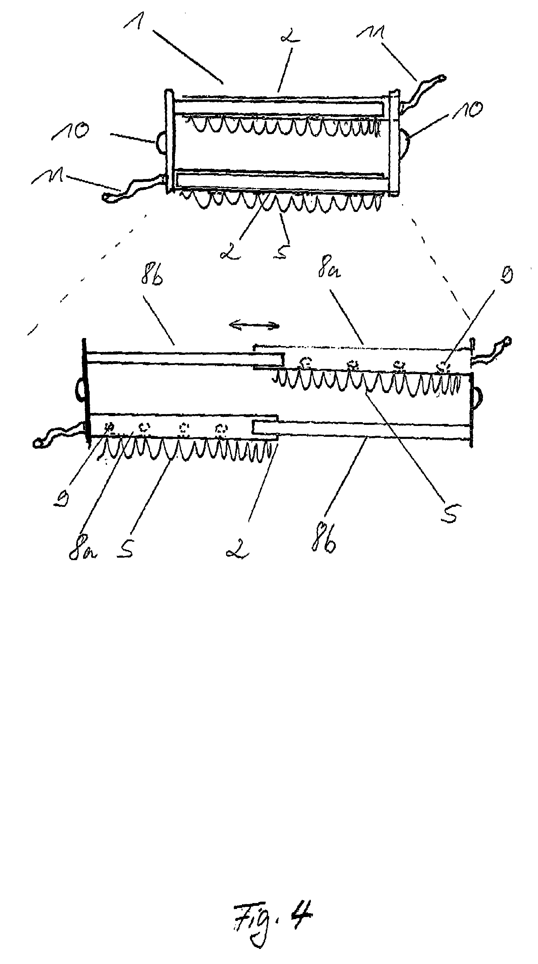

In einer alternativen Ausführungsform besteht der mehrteilige Applikationsbalken aus insgesamt vier Hohlprofilen, von denen jeweils zwei bewegbar konzentrisch ineinander geführt sind und parallel zueinander liegend angeordnet sind. Die Anordnung erfolgt dabei so, dass jeweils die Stirnseite eines Profils mit einem größeren Durchmesser und die Stirnseite eines Profils mit geringerem Durchmesser auf der gleichen Seite zu liegen kommen und auf den beiden Seiten jeweils durch ein Querelement miteinander verbunden sind. (Diese Ausführungsform ist in Fig. 4 beispielhaft veranschaulicht.)

Vorzugsweise weisen die bewegbar konzentrisch ineinander geführten Hohlprofile jeweils die gleiche Länge auf, so dass sie im ausgezogenen Zustand zusammengenommen etwa das Doppelte der Länge eines einzelnen Hohlprofils aufweisen.

Es liegt im Rahmen der Erfindung, dass zwei konzentrisch bewegbar ineinander geführte Hohlprofile so abgedichtet sind, dass die Spritzbrühe am Übergang der beiden Hohlprofile nicht austreten kann. Dies wird dadurch erreicht, dass in dem Endabschnitt des Profils mit dem größeren Durchmesser eine O-Ring-Dichtung angeordnet ist. Auf diese Weise sind die bewegbar konzentrisch ineinander geführten Hohlprofile im ausgezogenen Zustand, mit Ausnahme der zum Austritt der Spritzbrühe regulär vorgesehenen Öffnungen, flüssigkeitsdicht.

Falls der Applikationsbalken aus bewegbar konzentrisch ineinander geführten Hohlprofilen besteht, ist in einer besonders bevorzugten Ausführungsform vorgesehen, dass das Innere des Hohlprofils mit dem größeren Durchmesser den in den Applikationsbalken integrierten, mit einer Flüssigkeit beaufschlagbaren Abschnitt bildet, wobei der Mantel dieses, den größeren Durchmesser aufweisenden Hohlprofils mit Öffnungen versehen ist, die über die Länge des Profils verteilt sind. Die Anordnung der Öffnungen beschränkt sich auf das Hohlprofil mit dem größeren Durchmesser, weil die Mantelfläche des Hohlprofils mit dem geringeren Durchmesser nicht für die Anbringung von zusätzlichen einzelnen Elementen zur Verteilung der Spritzbrühe zur Verfügung steht.

In einer besonders bevorzugten Ausführungsform ist vorgesehen, dass ein Applikationsbalken, der aus zwei konzentrisch ineinander geführten und in Richtung der Längsachsen bewegbaren Hohlprofilen besteht, mit einem separaten Schlauch verbunden ist, wobei der Schlauch mehrere über die Länge des Schlauches verteilt angeordnete Öffnungen aufweist. Bei dieser Ausführungsform ersetzt der die Spritzbrühe aufnehmende Schlauch die Funktion des Hohlprofils als Querverteiler für die Spritzbrühe in horizontaler Richtung.

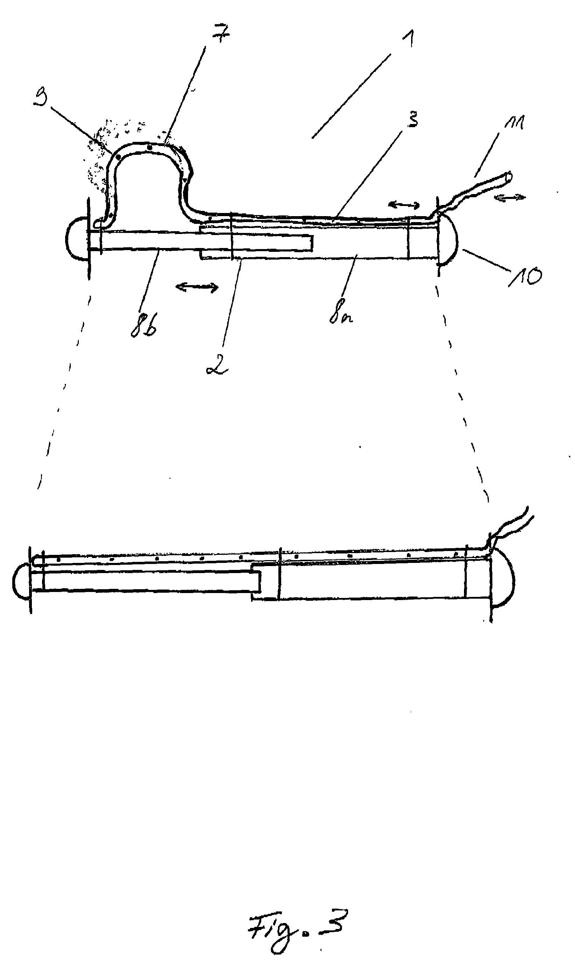

In einer ganz besonders bevorzugten Ausführungsform ist vorgesehen, dass ein aus zwei beweglich konzentrisch ineinandergeführten Hohlprofilen bestehender Applikationsbalken mit einem separaten biegbaren Schlauch verbunden ist, wobei der Schlauch eine Länge aufweist, die der Länge der Hohlprofile in ausgezogenen Zustand entspricht. Der Schlauch ist derart mit den beiden Hohlprofilen verbunden, dass der Schlauch mit zunehmendem Zusammenschieben der Hohlprofile eine Schleife bildet. Mit einer derartigen Vorrichtung kann die Arbeitsbreite der Vorrichtung problemlos variiert werden, wobei es aufgrund der Schleifenbildung des Schlauchs vorteilhafterweise nicht zu einer Doppelbehandlung kommt (s. Fig. 3). Um die Ausbildung einer Schleife zu vermeiden ist vorgesehen, dass der Schlauch relativ zum Applikationsbalken bewegbar ist und so an die tatsächliche Länge des Applikationsbalkens anpassbar ist. Nach der Anpassung, d. h. der Bewegung des Schlauches relativ zum Applikationsbalken, liegt der Schlauch parallel zum Applikationsbalken unabhängig von dessen Länge. Der Vorteil der Anpassung der Schlauchlänge an die tatsächliche Länge eines ausziehbaren Applikationsbalkens besteht darin, dass durch die Vermeidung der Schleife die Ausbringungsmenge an Spritzbrühe über die gesamte Schlauchlänge homogen ist.

In einer bevorzugten Ausführungsform ist vorgesehen, dass das Material, das der temporären Speicherung und Abgabe, d.h. der Übertragung der Spritzbrühe auf die Unkräuter dient, den in den Applikationsbalken integrierten mit einer Flüssigkeit beaufschlagbaren Abschnitt, bzw. den gesonderten ebenfalls mit einer Flüssigkeit beaufschlagbaren Bestandteil, der mit dem Applikationsbalken verbunden ist vollständig umgibt, wobei mit dem Material eine Vielzahl weiterer, in Bezug auf die Längsrichtung des Applikationsbalkens im Wesentlichen senkrecht angeordneten Verteilerelemente, verbunden sind.

In einer besonders bevorzugten Ausführungsform ist vorgesehen, dass die Verteilerelemente aus einem flexiblen und zugleich saugfähigen Material bestehen. Als Materialien für die Verteilerelemente kommen somit gewebeartige Stoffe, Fliesstoffe, Leder oder auch saugfähige Schaumstoffe in Frage. Die Materialwahl für die Verteilerelemente ist jedoch nicht nur auf die genannten Materialien festgelegt.

Ein bevorzugtes Beispiel für ein Gewebe stellen Handtücher, insbesondere Handtücher aus Frottee, dar. Es hat sich gezeigt, dass Frottee-Handtücher eine geeignete Saugfähigkeit gegenüber Spritzbrühe aufweisen. Als geeignetes Leder hat sich haushaltsübliches Fensterleder erwiesen.

Falls die Verteilerelemente aus einem flexiblen Material bestehen wird alleine die Schwerkraft dafür sorgen, dass die Verteilerelemente im Wesentlichen senkrecht zur Längsachse des Applikationsbalkens und damit auch im Wesentlichen senkrecht zur Erdoberfläche ausgerichtet sind.

In einer alternativen Ausführungsform ist vorgesehen, dass die Verteilerelemente aus einen flexiblen, nichtextilen Material bestehen, dass zumindest abschnittsweise eine strukturierte Oberfläche aufweist. Die Strukturierung der Oberfläche führt dazu, dass diese aufgrund der Kapillarwirkung der Oberflächenstruktur ein gewisses Flüssigkeitsvolumen temporär speichern kann. Wird ein derartiges Material mit Spritzbrühe beträufelt, so sammelt sich diese, bei gleichmäßiger Verteilung, auf der Oberfläche des Materials und tritt bei Berührung mit den Unkräutern leicht auf diese über.

Als Material, das für eine Oberflächenstrukturierung geeignet ist, ist eine flexible Folie aus Metall oder Kunststoff vorgesehen. Flexibel bedeutet in diesem Zusammenhang, dass die Dicke der Folie so bemessen ist, dass sich diese, bzw. ihre vertikal ausgerichteten Einzelelemente, bei Berührung mit Unkräutern umbiegen lassen.

Es liegt im Rahmen der Erfindung, dass die zusätzlichen senkrecht zum Applikationsbalken angeordneten Verteilerelemente aus einzelnen dicht nebeneinander angeordneten fransenartigen Gewebeteilen bestehen.

Unabhängig von der Wahl des Materials, d.h. egal ob es sich bei dem Material der Einzelverteilerelemente um eine metallische Folie oder Gewebe, bzw. um einen Fliesstoff, ein Leder oder einen Schaumstoff handelt, ist vorgesehen, dass die Verteilerelemente durch Einschnitte in das Material bereitgestellt werden. Dies wird dadurch erreicht, dass ein am Applikationsbalken frei nach unten hängender Gewebeabschnitt oder ein Metallfollen- bzw. Kunststofffolienabschnitt in vorzugsweise senkrechter Richtung zum Applikationsbalken Einschnitte aufweist, die nicht den gesamten Gewebeabschnitt durchtrennen. Durch diese Einschnitte entstehen einzelne Verteilerelemente, die zu dem in Querrichtung, d.h. in horizontaler Richtung, verlaufenden Applikationsbalken bzw. zu dem am Balken befestigten Schlauch, im Wesentlichen senkrecht ausgerichtet sind (Vertikal-Verteilerelemente).

Prinzipiell ist auch denkbar, dass das flexible, nicht textile Material in Bezug auf die Längsachse des Applikationsbalkenum nicht senkrecht, sondern schräg, verlaufende Einschnitte aufweist. Eine derartige Ausführungsform könnte bei entsprechender Festigkeit des insgesamt gleichwohl flexiblen Materials, und leichter Rotation des Applikationsbalkens um dessen Längsachse in die Arbeitsrichtung, die Funktion eines Kammes erfüllen, welcher die Unkräuter rechenartig durchkämmt und dabei aufgrund der durch die Schrägstellung hervorgerufenen Scherwirkung für eine noch bessere Ausbringung der Spritzbrühe sorgt.

Die Breite des Gewebeabschnittes ist vorzugsweise so bemessen, dass die durch Einschnitte vereinzelten Verteilerelemente eine Länge von mindestens 7 cm aufweisen. Die maximale Länge der Verteilerelemente ist von der jeweiligen Applikation abhängig und kann bei entsprechender Saug- bzw. Kapillarwirkung des Materials bis zu 20 cm betragen.

Um die beständige Ausrichtung der Verteilerelemente nach unten sicher zu stellen, ist vorgesehen, an den freillegenden Endabschnitten der Verteilerelemente zusätzlich einen Ring aus Metall oder Kunststoff anzuordnen. Aus Gewichtsgründen wird Kunststoff bevorzugt. Bei entsprechender Sättigung der Verteilerelemente mit Spritzbrühe ist es möglich, dass auch der mit einem Film aus Spritzbrühe überzogen wird. Aufgrund der Ausdehnung des Rings auch in horizontaler Richtung kommt es zu einer zusätzlichen Kontaktierung der Unkräuter. Dies kann von besonderem Vorteil sein, weil dadurch die Stengel, Blütenstände und Blätter der Unkräuter auch von unten mit Spritzbrühe bestrichen werden. Der Durchmesser des Ringes ist variabel, wobei mit zunehmendem Durchmesser des Ringes auch die Beabstandung der einzelnen Vertellerelemente zunimmt. Die Optimierung des Ringdurchmessers berücksichtigt, dass die Beabstandung der Verteilerelemente nicht zu groß werden darf, wenn die Ausbringung der Spritzbrühe auf die Unkräuter effektiv, d.h. flächig, bleiben soll.

Es ist denkbar, dass die Verteilerelement auch aus einzelnen Ketten bestehen. Bei dieser Ausführungsform ist vorgesehen, dass die aus den Öffnungen des Verteilerschlauchs, bzw. aus dem Inneren des aus einem Hohlprofil bestehenden Applikationsbalkens austretende Spritzbrühe direkt mit dem obersten Kettenglied In Kontakt kommen kann. Aus diesem Grund wird die Zahl der Öffnungen bei dieser Ausführungsform höher sein, als wenn die Verteilerelemente aus einem Material bestehen, welches die Spritzbrühe aufgrund seiner Kapillarität oder aufgrund seiner Saugwirkung selbst aktiv aus den Öffnung zieht, die sich in der mit Flüssigkeit beaufschlagbaren Komponente befinden. Die Ausführungsform, die als Vertikal-Vertellerelemente aus Einzelgliedern aufgebaute Ketten aufweist, eignet sich zur Ausbringung größerer Volumen pro Arbeitsgang.

Es ist denkbar, dass die aus einzelnen Ketten bestehenden Verteilerelemente untenends als zusätzliches Glied einen Ring aufweisen, dessen Durchmesser größer ist als der Durchmesser der übrigen Kettenglieder.

Es liegt im Rahmen der Erfindung, dass der Applikationsbalken zur manuellen Handhabung Haltegriffe aufweist. Diese sind vorzugsweise an einem oder an beiden Endabschnitten des Applikationsbalkens angeordnet. Ein einteiliger Applikationsbalken kann so bemessen sein, dass er bereits mit einem Haltegriff bequem von nur einer Person eingesetzt werden kann.

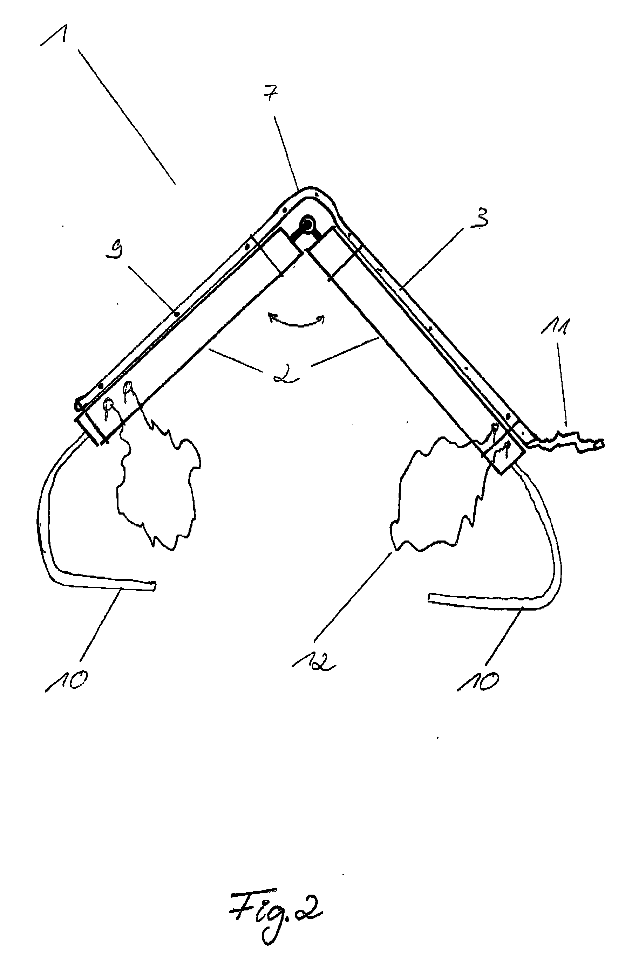

Es ist vorgesehen, dass die Haltegriffe lösbar, d.h. austauschbar, am Applikationsbalken befestigt sind. Außerdem ist vorgesehen, dass der oder die Haltegriffe in Kombination mit einem den Applikationsbalken tragenden Schultergurt genutzt wird. (Eine entsprechende Ausführungsform, bei welcher der kombinierte Einsatz von Schultergurt und hebelartig nutzbaren Haltegriffen auf vorteilhafte Weise miteinander verbunden sind, ist in Figur 2 dargestellt.)

Zur beständigen Versorgung der Applikationsvorrichtung mit Spritzbrühe ist diese durch eine Verbindungsleitung mit einem Vorratstank verbindbar. Dabei ist vorgesehen, dass zur Regulation der Durchflussmenge in der Verbindungsleitung ein Ventil angeordnet ist. Die Verbindungsleitung ist so mit dem Vorratstank verbunden, dass die Entnahme der Spritzbrühe an der tiefsten Stelle des Vorratstanks erfolgt. Außerdem ist vorgesehen, dass sich der Vorratstank nach unten, d. h. in Richtung der Entnahmestelle verjüngt. Durch die beiden letztgenannten Maßnahmen wird vermieden, dass das während der Ausbringung der Spritzbrühe Luftblasen in den Applikationsbalken gelangen können. Damit wird berücksichtigt, dass die Saugwirkung des zur temporären Speicherung der Spritzbrühe geeigneten Materials dann optimal ist, wenn keine Luftblasen in die mit einer Flüssigkeit beaufschlagbaren Komponente gelangen können.

Das Austreten der Spritzbrühe kann alleine durch die Gravitation verursacht sein oder mittels einer Pumpe unterstützt werden.

Es liegt im Rahmen der Erfindung, dass die Applikationsvorrichtung im Zusammenhang mit einem transportierbaren Vorratstank als Applikationssystem eingesetzt wird. Der Vorratstank für die Spritzbrühe kann entweder auf dem Rücken einer Person oder auf dem Rücken eines Lasttiers oder aber auf einem Fahrzeug befestigt sein. Falls die Förderung der Spritzbrühe allein auf der Gravitation beruht, d.h. nicht unter Einsatz einer Pumpe erfolgt, wird der Vorratstank innerhalb des Applikationssystems so angeordnet, dass dessen unterster Flüssigkeitsstand stets oberhalb des Applikationsbalkens, d.h. den für das Austreten der Spritzbrühe vorgesehenen Öffnungen, liegt.

Die Erfindung umfasst auch ein Verfahren, bei welchem die zuvorbeschriebene Applikationsvorrichtung eingesetzt wird, wobei der Applikationsbalken bei seinem Einsatz im Wesentlich auf einer Höhe gehalten wird, welche die Höhe der Kulturpflanzen überragt und die Höhe der Unkräuter unterschreitet. In der Praxis ist dabei zu bedenken, dass die Höhe der Unkräuter in einem Kulturbestand in der Regel nicht homogen ist. Die jeweilige Arbeitshöhe hängt also von der optischen Bewertung, d.h. vom Augenmaß, des Anwenders ab.

Für die Verwendung der in der Arbeitsbreite variablen Applikationsvorrichtungen sind insbesondere Kulturflächen mit variabler Breite vorgesehen. Kulturflächen mit variabler Breite sind vor allem bei terrassenförmig angelegten Reisfeldern vorzufinden. Diese können mit der erfindungsgemäßen Applikationsvorrichtung, bzw. einem entsprechenden Applikationssystem optimal, behandelt werden.

Weiterbildungen, Vorteile und Anwendungsmöglichkeiten der Erfindung ergeben sich auch aus der nachfolgenden Beschreibung der Zeichnungen, die verschiedene Ausführungsbeispiele veranschaulichen. Alle beschriebenen und/oder bildlich dargestellten Merkmale bilden für sich oder in beliebiger Kombination den Gegenstand der Erfindung unabhängig von ihrer Zusammenfassung in den Ansprüche und deren Rückbeziehung.

Es zeigen:
- Fig. 1a: Einteiliger Applikationsbalken ohne eine gesonderte mit Flüssigkeit beaufschlagbare Komponente
- Fig. 1b: Einteiliger Applikationsbalken mit gesonderter mit einer Flüssigkeit beaufgschlagbaren Komponente
- Fig. 2: Zweiteiliger Applikationsbalken aus zwei durch Gelenk beweglich miteinander verbundenen Abschnitten und einer sich über die gesamte Balkenbreite erstreckenden gesonderten mit einer Flüssigkeit beaufschlagbaren Komponente
- Fig. 3: Zweiteiliger Applikationsbalken aus zwei konzentrisch ineinandergeführten Abschnitten sowie mit einer sich über die gesamte Balkenbreite erstreckenden gesonderten mit einer Flüssigkeit beaufschlagbaren Komponente, und
- Fig. 4: Mehrteiliger Applikationsbalken aus 4, jeweils paarweise, konzentrisch ineinandergeführten Balkenabschnitten

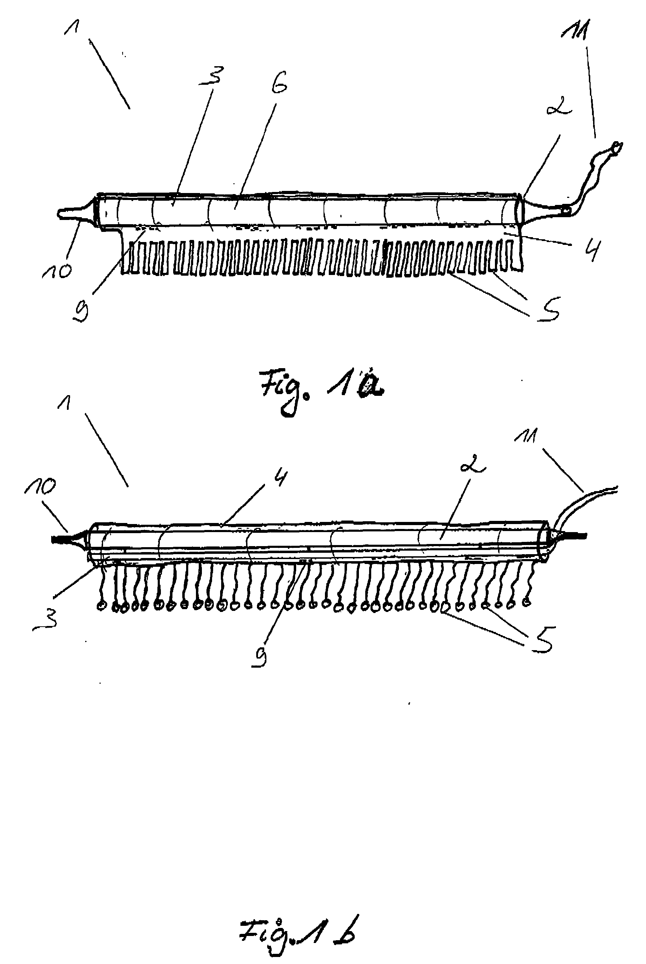

Fig. 1a zeigt die Applikationsvorrichtung 1. Im gezeigten Beispiel besteht der Applikationsbalken 2 aus einem Hohlprofil, das beidseitig Haltegriffe 10 aufweist. Die Mantelfläche des Applikationsbalkens 2 weist im unteren Bereich Öffnungen 9 auf, aus denen die sich im Innenraum 6 des Applikationsbalkens 2 befindliche Spritzbrühe austreten kann. Der Applikationsbalken 2 ist außenseitig von dem Material 4 zur temporären Speicherung der Spritzbrühe umgeben. Im gezeigten Beispiel besteht das Material 4 aus einem nach unten hängenden Gewebe- oder Folienabschnitt, der im unteren Teil Einschnitte aufweist, so dass sich bei variabler Breite der Einschnitte die einzelnen Verteilerelemente 5 ergeben. Die Zuführung der Spritzbrühe erfolgt über die Verbindungsleitung 11. Das Material 4 zur temporären Speicherung der Spritzbrühe kann entweder aus einem saugfähigen Gewebe oder Fließstoff bestehen. Alternativ kommt der Einsatz einer flexiblen Folie aus Metall oder Kunststoff in Frage, wobei die Oberfläche der Folie eine Strukturierung aufweist, welche die temporäre Speicherung der Spritzbrühe ermöglicht.

Im gezeigten Beispiel sind die Einschnitte in das Material 4 im Wesentlichen senkrecht zur Längsachse des Applikationsbalkens orientiert. Die kammartige Wirkung der Verteilerelemente 5 gegenüber den Unkräutern kann zusätzlich erhöht werden, in dem die Einschnitte, relativ zur Längsachse des Applikationsbalkens 2 schräg erfolgen. Falls ein derart gestalteter Applikationsbalken beim Einsatz geringfügig um seine Längsachse in die Bewegungsrichtung rotiert wird entfaltet der Abschnitt 4 gegenüber den Unkräutern, neben der kammartigen Wirkung, eine zusätzliche Scherwirkung. Die Scherwirkung kann vorteilhafter Weise dazu führen, dass die Unkräuter im seitlichen Bereich noch intensiver mit der Spritzbrühe in Kontakt kommen. Die hier nicht gezeigte, aber ebenfalls im Rahmen der Erfindung liegende Strukturierung des Abschnitts 4 mit einem Sägezahnmuster, d.h. mit V-förmigen Einschnitten, hat eine ähnlich vorteilhafte Wirkung.

Fig. 1b zeigt einen einteiligen Applikationsbalken 2, der beidseitig Haltegriffe 10 aufweist. Im gezeigten Beispiel wird die Spritzbrühe nicht über den Innenraum des Applikationsbalkens 2 zugeführt, sondern über eine separate mit Flüssigkeit beaufschlagbare Komponente 3, die im gezeigten Beispiel aus einem Schlauch 3 oder einem Rohr besteht, dem über die Verbindungsleitung 11 Spritzbrühe zugeführt wird. Im gezeigten Beispiel wird der Applikationsbalken 2 und die entlang der Längsachse des Applikationsbalkens lösbar befestigte Komponente 3 von dem Material 4 zur temporären Speicherung der Spritzbrühe umgeben. Im unteren Abschnitt des Materials 4 zur temporären Speicherung der Spritzbrühe sind die Verteilerelemente 5 angeordnet. Die im Beispiel gezeigten Verteilerelemente 5 bestehen aus einzelnen Elementen, die aus anderen Materialien bestehen können. Geeignet sind schnurartige oder fransenartige Abschnitte aus einem saugfähigen Material. Die Verteilerelemente 5 weisen im gezeigten Beispiel untenends einen Ring auf. Der Ring sorgt für die Ausrichtung der Verteilerelemente und vorteilhafterweise für einen erhöhten Widerstand, wenn die Verteilerelemente mit den Unkräutern in Kontakt kommen. Das im Beispiel gezeigte Material 4 zur temporären Speicherung der Spritzbrühe besteht aus einem saugfähigen Material.

Fig. 2 zeigt eine Applikationsvorrichtung 1, die aus zwei durch Gelenk bewegbar miteinander verbundenen Balkenabschnitten 2 besteht. Die Balkenabschnitte 2 sind lösbar mit einem Schlauch 7 verbunden, der insbesondere im Bereich des Gelenks flexibel ist. Der Schlauch 7 wird durch die Verbindungsleitung 11 mit Spritzbrühe beaufschlagt. Die Spritzbrühe kann durch die Öffnungen 9 austreten und das im Beispiel nicht gezeigte Material 4 zur temporären Speicherung der Spritzbrühe benetzen.

Durch die gelenkartige Verbindung kann die Arbeitsbreite der Applikationsvorrichtung 1 stufenlos variiert werden, wobei die maximale Arbeitsbreite durch die Gesamtlänge des Schlauches 3, die identisch ist mit der Gesamtlänge der beiden Balkenabschnitte 2, festgelegt ist. Die gezeigte Applikationsvorrichtung 1 weist an den Enden der beiden Applikationsbalken Abschnitte 2 die Haltegriffe 10 auf. Die Haltegriffe 10 sind bewusst hebelartig gestaltet. Während das Hauptgewicht des Applikationsbalkens durch die Schultergurte 12, die ebenfalls im endseitigen Bereich der Balkenabschnitte 2 angeordnet sind, getragen wird, dienen die Haltegriffe 10 dem Anwender zur Stabilisierung der Applikationsvorrichtung 1. So ist es dem Anwender z.B. möglich, die Applikationsvorrichtung durch das nach unten Drücken der Haltegriffe 10 in einer parallel zur Erdoberfläche verlaufenen Ebene zu stabilisieren. Abhängig von der Arbeitsbreite wird die in Fig. 2 gezeigte Applikationsvorrichtung 1 von einer oder von zwei Personen getragen. Ein besonderer Vorteil der in Fig. 2 gezeigten Vorrichtung besteht darin, dass sich die Träger der Applikationsvorrichtung 1 stets auf der noch nicht mit Pestizid behandelten Kulturfläche bewegen können. Das gilt auch, wenn die Applikationsvorrichtung auf ihre maximale Arbeitsbreite ausgeklappt ist, weil die nach innen gebogenen Haltegriffe 10 eine entsprechende, noch innerhalb der Arbeitsbreite der Vorrichtung liegende Positionierung der Träger erlauben. Für die Gesundheit der Anwender ist dies ein wesentlicher Vorteil.

Fig. 3 zeigt eine weitere Ausführungsform der Erfindung, die dadurch gekennzeichnet ist, dass die Arbeitsbreite der Applikationsvorrichtung 1 variabel ist, ohne dass es zu einer Doppelbehandlung der Kulturfläche kommt. Die Vermeidung einer Doppelbehandlung wird dadurch erreicht, dass der mit den beiden konzentrisch ineinander geführten Hohlprofile 8a, 8b verbundene Schlauch 7 beim zusammenschieben der Hohlprofile 8a, 8b eine Schleife ausbildet. Im unteren Teil der Zeichnung ist die Applikationsvorrichtung 1 im Zustand ihrer maximalen Arbeitsbreite gezeigt. Die beiden Hohlprofile 8a und 8b weisen endseitig jeweils einen Haltegriff 10 auf. Zur Vermeidung der Schleifenbildung ist denkbar, dass die mit Flüssigkeit beaufschlagbare Komponente 3, die im gezeigten Beispiel aus einem flexiblen Schlauch 7 besteht, dass der Schlauch relativ zum Applikationsbalken bewegbar ist. In Fig. 3 wird die Bewegbarkeit des Schlauches durch die beiden Doppelpfeile auf der rechten Seite des Applikationsbalkens im Bereich der mit dem Bezugszeichen 11 gekennzeichneten Verbindungsleitung symbolisch angezeigt. Auf diese Weise kann der Schlauch an die tatsächliche Länge des Applikationsbalkens angepasst werden, selbst wenn dieser nicht auf seine volle Länge ausgezogen ist. Die Vermeidung der aus dem flexiblen Schlauch 7 bestehenden Schleife besteht darin, dass die Ausbringungsmenge an Spritzbrühe unabhängig von der gewählten Arbeitsbreite des ausziehbaren Spritzbalkens 1 einheitlich ist.

Fig. 4 zeigt eine Applikationsvorrichtung 1, die ebenfalls durch eine variable Arbeitsbreite gekennzeichnet ist. Die beiden Applikationsbalken 2 bestehen jeweils aus zwei bewegbar konzentrisch ineinander geführten Hohlprofilen 8a, 8b, die parallel zueinander angeordnet sind, wobei jeweils die Stirnseite eines Profils mit dem größeren Durchmesser 8a und die Stirnseite eines Profils mit dem kleineren Durchmesser 8b auf der gleichen Seite zu liegen kommen und jeweils durch ein Querelement verbunden sind. Im gezeigten Beispiel bestehen die Querelemente aus den Haltegriffen 10. Das Hohlprofil mit dem größeren Durchmesser 8a wird durch die Verbindungsleitung 11 mit Spritzbrühe versorgt. Die Hohlprofile 8a weisen jeweils Öffnungen 9 auf, durch welche die Spritzbrühe austreten und die Verteilerelemente 5 benetzen kann.

### Bezugszeichenliste

- 1: Applikationsvorrichtung
- 2: Applikationsbalken
- 3: Komponente (beaufschlagbar) mit Flüssigkeit
- 4: Material zur temporären Speicherung der Spritzbrühe
- 5: Verteilerelemente
- 6: Innenraum des Applikationsbalkens
- 7: Flexibler Schlauch
- 8a: Hohlprofil mit größerem Außendurchmesser
- 8b: Hohlprofil mit kleinerem Außendurchmesser
- 9: Öffnungen
- 10: Haltegriff
- 11: Verbindungsleitung
- 12: Schultergurt

## Patentansprüche

1. Applikationsvorrichtung (1) zur selektiven Applikation von Pestiziden auf Unkräuter, welche die Kulturpflanzen in der Höhe überragen mit:
- einem Applikationsbalken (2), der mindestens eine Komponente (3) aufweist, die mit einer Flüssigkeit beaufschlagbar ist, und mit
- einem zur temporären Speicherung der Spritzbrühe geeigneten Material (4), das an der mit einer Flüssigkeit beaufschlagbaren Komponente (3) zumindest abschnittsweise anliegt,
**dadurch gekennzeichnet, dass** von dem zur temporären Speicherung der Spritzbrühe geeigneten Material (4) eine Vielzahl einzelner Verteilerelemente (5) ausgehen.

2. Applikationsvorrichtung (1) nach Anspruch 1, **dadurch gekennzeichnet, dass** die mit einer Flüssigkeit beaufschlagbare Komponente (3) aus
- einem in den Applikationsbalken (2) integrierten mit einer Flüssigkeit beaufschlagbarem Raum (6) besteht, oder aus
- einer gesonderten mit einer Flüssigkeit beaufschlagbaren Komponente (7), die mit dem Applikationsbalken (2) verbundenen ist, besteht.

3. Applikationsvorrichtung (1) nach einem der Ansprüche 1 und 2, **dadurch gekennzeichnet, dass** der Applikationsbalken (2) einteilig oder mehrteilig ist.

4. Applikationsvorrichtung (1) nach Anspruch 1 bis 3, **dadurch gekennzeichnet, dass** der Applikationsbalken (2) mehrteilig ist und aus mindestens zwei gelenkartig miteinander verbundenen Abschnitten besteht.

5. Applikationsvorrichtung (1) nach einem der vorhergehenden Ansprüche, **dadurch gekennzeichnet, dass** der Applikationsbalken (2) aus einem oder mehreren Hohlprofilen (8a, 8b) aus Metall oder Kunststoff mit kreisrundem, ovalem, oder polygonalem Querschnitt besteht.

6. Applikationsvorrichtung (1) nach Anspruch 5, **dadurch gekennzeichnet, dass** der Applikationsbalken (2) mehrteilig ist und aus mindestens zwei konzentrisch ineinander geführten und in Richtung der Längsachsen bewegbaren Hohlprofilen (8a, 8b) besteht, wobei die Hohlprofile (8a, 8b) jeweils die gleiche Länge aufweisen und auf etwa das Doppelte der Länge eines einzelnen Hohlprofils (8a, 8b) ausziehbar sind.

7. Applikationsvorrichtung (1) nach Anspruch 6, **dadurch gekennzeichnet, dass** zwischen der äußeren Mantelfläche des den geringeren Querschnitt aufweisenden Hohlprofils (8b) und der inneren Mantelfläche des den größeren Querschnitt aufweisenden Hohlprofils (8a) eine Dichtung angeordnet ist.

8. Applikationsvorrichtung (1) nach einem der vorhergehenden Ansprüche, **dadurch gekennzeichnet, dass** die in den Applikationsbalken integrierte, mit einer Flüssigkeit beaufschlagbare Komponente (3), der Innenraum (6) mindestens eines der Hohlprofile (8a) ist, welche den Applikationsbalken (2) bilden, wobei der Mantel des Hohlprofils (8a) Öffnungen (9) aufweist, die über die Länge des Hohlprofils (8a) verteilt sind.

9. Applikationsvorrichtung (1) nach einem der Ansprüche 1 bis 7, **dadurch gekennzeichnet, dass** die gesonderte mit einer Flüssigkeit beaufschlagbare Komponente (3) aus einem zumindest abschnittsweise flexiblen Schlauch (7) besteht, wobei der Schlauch (7) lösbar mit dem Applikationsbalken (2) verbundenen ist und mehrere über die Länge des Schlauches (7) verteilt angeordnete Öffnungen (9) aufweist.

10. Applikationsvorrichtung (1) nach Anspruch 9, **dadurch gekennzeichnet, dass** der Applikationsbalken (2) aus zwei bewegbar konzentrisch ineinander geführten Hohlprofilen (8a, 8b) besteht und die Länge des Schlauches (7) etwa der Länge entspricht, welche die zwei bewegbar konzentrisch ineinander geführten Hohlprofile (8a, 8b) im ausgezogenen Zustand aufweisen, wobei der Schlauch (7) derart mit den Hohlprofilen (8a, 8b) verbunden ist, dass dieser beim Zusammenschieben der selben eine zunehmend größer werdende Schleife bildet.

11. Applikationsvorrichtung (1) nach einem der vorhergehenden Ansprüche, **dadurch gekennzeichnet, dass** das zur temporären Speicherung der Spritzbrühe geeigneten Material (4) die mit Flüssigkeit beaufschlagbare Komponente (3) vollständig umgibt ist und die Vielzahl der weiteren einzelnen Verteilerelemente (5) aus demselben Material (4) bestehen.

12. Applikationsvorrichtung (1) nach Anspruch 11, **dadurch gekennzeichnet, dass** die Vertellerelemente (5) aus einem flexiblen und saugfähigen Material (4) bestehen.

13. Applikationsvorrichtung (1) nach Anspruch 12, **dadurch gekennzeichnet, dass** das Material (4) und/oder die Verteilerelemente (5) aus einem Gewebe, Vliesstoff, Leder und/oder aus Schaumstoff bestehen.

14. Applikationsvorrichtung (1) nach einem der Ansprüche 1 - 13, **dadurch gekennzeichnet, dass** die Verteilerelemente (5) aus einzelnen nebeneinander angeordneten fransenartigen Gewebeteilen bestehen.

15. Applikationsvorrichtung (1) nach einem der Ansprüche 1 bis 11, **dadurch gekennzeichnet, dass** das zur temporären Speicherung der Spritzbrühe geeignete Material (4) und/oder die Verteilerelemente (5) aus einem flexiblen Material mit zumindest abschnittsweise strukturierter Oberfläche bestehen, so dass das Material aufgrund der Kapillarwirkung der Oberflächenstruktur ein Flüssigkeitsvolumen temporär speichern kann.

16. Applikationsvorrichtung (1) nach Anspruch 14, **dadurch gekennzeichnet, dass** die Verteilerelemente (5) aus einer flexiblen Folie aus Metall oder Kunststoff bestehen.

17. Applikationsvorrichtung (1) nach Anspruch 16, **dadurch gekennzeichnet, dass** die Verteilerelemente (5) aus einem, bei Einsatz der Vorrichtung nach unten hängenden Gewebe- oder Folienabschnitt bestehen, der in senkrechter oder schräger Richtung zum Applikationsbalken (2) eine Vielzahl von Einschnitten aufweist.

18. Applikationsvorrichtung (1) nach einem der vorhergehenden Ansprüche, **dadurch gekennzeichnet, dass** an dem freien Endabschnitt einzelner oder aller Verteilerelemente (5) jeweils zusätzlich ein Ring angeordnet ist.

19. Applikationsvorrichtung (1) nach einem der Ansprüche 1 bis 11, **dadurch gekennzeichnet, dass** jeweils Verteilerelemente (5) aus einer einzelnen Ketten besteht.

20. Applikationsvorrichtung (1) nach Anspruch 19, **dadurch gekennzeichnet, dass** die Ketten im unteren Abschnitt als zusätzliches Glied ein Ring angeordnet ist, der einen größeren Durchmesser aufweist, als die übrigen Kettenglieder.

21. Applikationsvorrichtung (1) nach einem der vorhergehenden Ansprüche, **dadurch gekennzeichnet, dass** der Applikationsbalken (2) an einem oder an beiden Endabschnitten einen Haltegriff (15) aufweist, der optional lösbar befestigt ist, wobei der Haltegriff als Hebel gestaltet ist und in Kombination mit einem Schultergurt zur Stabilisierung der Applikationsvorrichtung nutzbar ist.

22. Applikationsvorrichtung (1) nach einem der vorhergehenden Ansprüche, **dadurch gekennzeichnet, dass** die mit einer Flüssigkeit beaufschlagbare Komponente (3) durch eine Verbindungsleitung (11) mit einem Vorratstank für Spritzbrühe verbindbar ist, wobei die Verbindungsleitung (11) zur Regulation der Durchflussmenge optional ein Ventil aufweist.

23. Applikationssystem zur selektiven Applikation (Ausbringung) von Pestiziden auf Unkräuter, welche die Kulturpflanzen in der Höhe überragen, bestehend aus einer Applikationsvorrichtung (1) nach einem der Ansprüche 1 bis 22 sowie einem transportierbaren Vorratstank.

24. Applikationssystem nach Anspruch 23, **dadurch gekennzeichnet, dass** die Anordnung des Vorratstanks so erfolgt, dass dessen unterster Flüssigkeitsstand stets oberhalb des Applikationsbalkens (2) liegt.

25. Applikationssystem nach einem der Ansprüche 22 bis 23, **dadurch gekennzeichnet, dass** das Applikationssystem zur Förderung der Spritzbrühe vom Spritztank zum Applikationsbalken (2) eine Pumpe aufweist.

26. Verfahren zur selektiven Bekämpfung von Unkräutern, welche die Kulturpflanzen in der Höhe überragen, unter Einsatz einer Applikationsvorrichtung nach einem der Ansprüche 1 bis 22 oder unter Einsatz des Applikationssystems nach einem der Ansprüche 23 bis 25, wobei der Applikationsbalken bei seinem Einsatz auf einer Höhe gehalten wird, welche die Höhe der Kulturpflanzen überragt und die Höhe der Unkräuter unterschreitet.

27. Verwendung der Applikationsvorrichtung nach Anspruch 1 bis 22 und/oder des Applikationssystems nach einem der Ansprüche 23 bis 25 zur Bekämpfung von Unkräutern in Reiskulturen, mit variabler Breite der Kulturfläche.
